(19)

**Europäisches Patentamt**
**European Patent Office**
**Office européen des brevets**

(11) **EP 4 226 141 B1**

(12) **EUROPEAN PATENT SPECIFICATION**

(45) Date of publication and mention
of the grant of the patent:
**24.07.2024 Bulletin 2024/30**

(21) Application number: **21794243.2**

(22) Date of filing: **05.10.2021**

(51) International Patent Classification (IPC):
$G01N\ 29/06$ ^(2006.01)  $G02B\ 21/32$ ^(2006.01)
$B01L\ 3/00$ ^(2006.01)  $G01N\ 15/0227$ ^(2024.01)
$G01N\ 15/14$ ^(2024.01)  $G01N\ 29/44$ ^(2006.01)
$G06T\ 7/00$ ^(2017.01)  $G06T\ 7/246$ ^(2017.01)
$G06V\ 20/69$ ^(2022.01)

(52) Cooperative Patent Classification (CPC):
**B01L 3/502715; B01L 3/502761; G01N 15/0227;
G01N 15/1425; G01N 15/1429; G01N 15/1433;
G01N 29/06; G01N 29/4436; G02B 21/32;
G06T 7/0016; G06T 7/246; G06V 20/693;**
B01L 2200/0652; B01L 2300/0877;
B01L 2400/0436;                    (Cont.)

(86) International application number:
**PCT/NL2021/050605**

(87) International publication number:
**WO 2022/075844 (14.04.2022 Gazette 2022/15)**

(54) **DETERMINING PHYSICAL PROPERTIES OF CELLULAR BODIES BASED ON ACOUSTIC FORCE SPECTROSCOPY**

BESTIMMUNG DER PHYSIKALISCHEN EIGENSCHAFTEN VON ZELLKÖRPERN AUF BASIS VON
SCHALLKRAFTSPEKTROSKOPIE

DÉTERMINATION DE PROPRIÉTÉS PHYSIQUES DE CORPS CELLULAIRES EN FONCTION
D'UNE SPECTROSCOPIE DE FORCE ACOUSTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2020 NL 2026628**

(43) Date of publication of application:
**16.08.2023 Bulletin 2023/33**

(73) Proprietors:
• **LUMICKS CA Holding B.V.**
**1105 AG Amsterdam (NL)**
• **Stichting VU**
**1081 HV Amsterdam (NL)**

(72) Inventors:
• **BIEBRICHER, Andreas Sebastian**
**1081 HV Amsterdam (NL)**

• **BOGATYR, Vadim**
**1081 HV Amsterdam (NL)**
• **WUITE, Gijs Jan Lodewijk**
**1081 HV Amsterdam (NL)**
• **PETERMAN, Erwin Johannes Gerard**
**1081 HV Amsterdam (NL)**
• **HELLER, Iddo**
**1081 HV Amsterdam (NL)**
• **REIJMERS, Rogier Martijn**
**1059 CH Amsterdam (NL)**

(74) Representative: **De Vries & Metman**
**Overschiestraat 180**
**1062 XK Amsterdam (NL)**

(56) References cited:
**CN-A- 111 157 616      US-A1- 2014 033 808
US-A1- 2019 255 527**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- **WANG HAN ET AL: "Single-cell compressibility quantification for assessing metastatic potential of cancer cells through multi-frequency acoustophoresis", MICROFLUIDICS AND NANOFLUIDICS, SPRINGER, DE, vol. 22, no. 6, 12 June 2018 (2018-06-12), pages 1 - 7, XP036532432, ISSN: 1613-4982, [retrieved on 20180612], DOI: 10.1007/S10404-018-2081-1**
- **RAYA SORKIN ET AL: "Probing cellular mechanics with acoustic force spectroscopy", MOLECULAR BIOLOGY OF THE CELL, 8 August 2018 (2018-08-08), United States, pages 2005 - 2011, XP055720541, Retrieved from the Internet <URL:https://www.molbiolcell.org/doi/pdf/10.1091/mbc.E18-03-0154> [retrieved on 20210705], DOI: 10.1091/mbc.E18-03-0154**
- **KAMSMA DOUWE ET AL: "Tuning the Music: Acoustic Force Spectroscopy (AFS) 2.0", METHODS, ACADEMIC PRESS, NL, vol. 105, 6 May 2016 (2016-05-06), pages 26 - 33, XP029659429, ISSN: 1046-2023, DOI: 10.1016/J.YMETH.2016.05.002**

(52) Cooperative Patent Classification (CPC): (Cont.)
G01N 15/149; G01N 2015/1027; G01N 2015/1493;
G01N 2291/02466; G06T 2207/10016;
G06T 2207/10056; G06T 2207/30024;
G06T 2207/30241

**Description**

Field of the invention

The disclosure relates to determining physical properties of cellular bodies based on acoustic force spectroscopy and, in particular, though not exclusively, to methods and systems for determining physical properties of cellular bodies based on acoustic force spectroscopy, to method and systems for sorting cells based on such physical properties and a computer program product enabling a computer system to perform such methods.

Background of the invention

Accurate and fast determination of physical properties of cellular bodies, e.g. mechanical properties of cellular bodies under different circumstances, is highly relevant for studying biological processes and for developing therapies in medicine e.g. immune oncology. Different techniques such as acoustic force spectroscopy (AFS) and acoustophoresis have been developed to probe the mechanics of cells.

For example, in their article *M*icrochip based microrheology via Acoustic Force Spectroscopy shows that endothelial cell mechanics follows a fractional viscoelastic model, doi: https://doi.org/10.1101/2020.07.02.185330 Nguyen et al, describe the use of an ASF system to measure viscoelastic properties of cells attached to beads and compare the measurements with viscoelastic models. In a typical AFS system, a wall of a flow cell is functionalized with a cell monolayer. By attaching polystyrene beads to the cells and applying an acoustic force in a direction perpendicular to the wall surface, the shear modus of the cells can be probed by monitoring the spatio-temporal behavior of the beads.

An important parameter for classifying cellular bodies, such as cancer cells, is the cell compressibility. Wang et al, describe in their article Single-cell compressibility quantification for assessing metastatic potential of cancer cells through multi-frequency acoustophoresis, Microfluids and Nanofluidics (2018) 22:26, an *acoustophoresis* method, wherein cells are introduced in a flow cell and a multi-frequency 3D acoustic force field is controlled to move levitated cells between different acoustic nodes in a horizontal plane. Cells moving in the force field are imaged and tracked and experimentally obtained data such as the cell velocity are fitted to a general simulation model, which simulates the velocity and pressure gradients created by the two acoustic nodes in the flow cell. Using cell parameters as fit parameters enables them to derive a measure for the compressibility of the cells.

A disadvantage of the above-described acoustophoresis scheme for determining the cell compressibility is that it requires both complex handling of the cells in the flow cell and complex scheme of modelling and fitting experimental data to a simulated model. A drawback of the scheme is that it requires precise knowledge of the microfluidic flow channel and the two horizontal acoustic fields in order to be able to simulate full particle trajectories. This produces not only a large computational effort, but also relies on many assumptions, which renders the method vulnerable to practical deviations potentially introducing larger errors in the obtained data. A further drawback relates to the fact that the different cell parameters, such as density and compressibility, are determined by fitting a single measurement. This entanglement results in reduced fitting precision. The complexity renders the scheme not suitable for accurate, high throughout characterization of a heterogenous population of a large number of cells.

Hence, from the above, it follows that there is a need in the art for improved methods and systems for determining physical properties of a cellular body, such as the cell compressibility. In particular, there is a need in the art for improved methods and systems that allow accurate, fast and efficient determination of physical properties of a cellular body such as the cell compressibility and for classifying and sorting cellular bodies based on such properties.

Summary of the invention

As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including a functional or an object oriented programming language such as Java(TM), Scala, C++, Python or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer, server or virtualized server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), or graphics processing unit (GPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the embodiments in this disclosure to reduce or eliminate at least one of the drawbacks known in the prior art.

The main insight of the embodiments in this disclosure is that cell properties such as the compressibility of cellular bodies can be determined accurately and efficiently using acoustic force spectroscopy.

In an aspect, the invention relates to a method for determining cell properties wherein the method comprises receiving, by a processor, images representing manipulation of cellular bodies in a holding space, the holding space comprising a wall surface, the manipulation including exerting one or more acoustic force pulses to the cellular bodies provided on the wall surface based on generating one or more acoustic field gradients in the holding space, the force pulses having a direction away from the wall surface. The method also comprises analyzing, by the processor, the images, the analyzing including determining the size of the cellular bodies and tracking locations of the cellular bodies during each of the one or more acoustic force pulses and after each of the one or more acoustic force pulses, the tracking locations defining one or more first trajectories of the cellular bodies moving away from the wall surface and one or more second trajectories of the cellular bodies moving towards the wall surface. The method also comprises determining, by the processor, densities of the cellular bodies based on the one or more second trajectories and a sedimentation model of the cellular bodies moving towards the wall surface and determining cellular body velocities based the one or more first trajectories and a velocity model of the cellular bodies moving away from the wall surface. Finally, the method comprises determining, by the processor, a contrast factor for each of the cellular bodies based on the sizes and the densities of the cellular bodies, the one or more acoustic field gradients and the cellular body velocities. The method further comprises determining a compressibility for each of the cellular bodies based on the determined contrast factors.

.The invention allows large heterogenous sets of cellular bodies to be classified according to certain cell properties, such as size, density and/or compressibility, based on acoustic force spectroscopy. In contrast to prior art schemes, the invention does not need any complex modelling and/or model assumptions in order to fit the data and therefore provides more robust results in complicated and non-ideal systems as expected when working with biological extracts. Further, the invention provides a scheme wherein parameters such as density and compressibility are determined based on separate data sets, i.e. trajectories during a force pulse and trajectories after a force pulse. This way, problems related to deriving different parameters from one data set can be avoided.

The term cellular body referred to in this application may include cell portions like subcellular organelles, cell nuclei, and/or mitochondria. The term may also refer to a vesicle, e.g. a lipid vesicle. A cellular body may be unicellular or pluricellular, such as small clumped cell groups, plant or animal biopts, dividing cells, budding yeast cells, colonial protists, etc. A cellular body may also be animal embryos in an early stage of development (e.g. the morula-stadium of a mammal, possibly a human embryo). In particular cases, different types of cellular bodies may be studied together. E.g., cellular bodies from a mucosal swab, blood sample, or other probing techniques could be used. A cellular body may also be one or more immune cells, one or more tumor cells, one or more cells that have been infected, for example by a virus.

In an embodiment, the analyzing of the images may further comprise determining positions of cellular bodies and using a map of a non-homogenous acoustic field gradient in the holding space to determine acoustic field gradients at the positions of the cellular bodies. In an embodiment, the map may comprise information associated with an acoustic field gradient as a function of the position, for example a 3D position, in the holding space.

In an embodiment, the determining the densities of the cellular bodies may include: determining sedimentation velocities of the cellular bodies based on the one or more second trajectories and the sedimentation model which takes into account a non-constant viscosity as a function of a distance to the wall surface, preferably the non-constant viscosity according to Brenner's law; and, determining the densities of the cellular bodies based on the sedimentation velocities and a mathematical relation between a density of a cellular body and a sedimentation velocity of the cellular body.

In an embodiment, the determining sedimentation velocities may include fitting the one or more second trajectories with the sedimentation model.

In an embodiment, the determining cellular body velocities may include: fitting the one or more first trajectories with the velocity model, the velocity model including a mathematical relation between a velocity of a cellular body in a fluid while a force is exerted to the cellular body using an acoustic field gradient.

In an embodiment, the mathematical relation may include the effect of gravity and/or buoyancy and/or the effect of a viscosity chance of the fluid according to Brenner's law.

In an embodiment, exerting one or more force pulses onto the cellular bodies may include generating, by an acoustic wave generator, the one or more one or more acoustic field gradients in the holding space.

In an embodiment, the method may further include: classifying the cellular bodies based on the determined sizes, density and/or compressibilities.

In a second aspect, the invention relates to a method for sorting cellular bodies by performing the method according to the first aspect, wherein the holding space is a holding space of a flow cell and the flow cell comprises or is connected to a sorting device, wherein the manipulation further comprises transporting the cellular bodies to the sorting device, and wherein the method further comprises tracking the location of the cellular bodies during the transport of the cellular bodies to the sorting device; and, sorting the tracked cellular bodies by controlling the sorting device based on the size, density, contrast factor and/or compressibility.

In a third aspect, the invention relates to a module for determining cell properties based image analysis, wherein the module comprises a computer readable storage medium having computer readable program code embodied therewith, and a processor, preferably a microprocessor, coupled to the computer readable storage medium, wherein responsive to executing the computer readable program code.

The module is configured to perform the following executable operations: receiving images representing manipulating cellular bodies in a holding space, the holding space comprising a wall surface, the manipulating including exerting one or more acoustic force pulses to the cellular bodies provided on the wall surface based on generating one or more acoustic field gradients in the holding space, the force pulses having a direction away from the wall surface; analyzing the images, the analyzing including determining the size of the cellular bodies and tracking locations of the cellular bodies during each of the one or more acoustic force pulses and after each of the one or more acoustic force pulses, the tracking locations defining one or more first trajectories of the cellular bodies moving away from the wall surface and one or more second trajectories of the cellular bodies moving towards the wall surface; determining densities of the cellular bodies based on the one or more second trajectories and a sedimentation model of the cellular bodies moving towards the wall surface and determining cellular body velocities based the one or more first trajectories and a velocity model of the cellular bodies moving away from the wall surface; and, determining a contrast factor for each of the cellular bodies based on the sizes and the densities of the cellular bodies, the one or more acoustic field gradients and the cellular body velocities and determining a compressibility for each of the cellular bodies based on the determined contrast factors.

In a further aspect, the invention may relate to a system for determining cell properties comprising: a flow cell comprising a holding space for cellular bodies; a force generator for applying acoustic force pulses to the cellular bodies; an imaging system for capturing images of the cellular bodies in the flow cell; an image processing system for processing the captured images; a controller for controlling the flow cell and the sorting device; and the module according to the second aspect.

In yet another aspect, the invention may relate to a system for sorting cells based on cell properties which may comprise: a flow cell comprising a holding space for cellular bodies; a sorting device connected to the flow cell; a force generator for applying a force to the cellular bodies; an imaging system for capturing images of the cellular bodies in the flow cell; an image processing system for processing the captured images; a controller for controlling the flow cell and the sorting device; a module according to the third aspect.

According to this aspect, the executable instructions further include tracking the location of the cellular bodies during the transport of the detached cellular bodies to the sorting device; and, sorting the tracked cellular bodies by controlling the sorting device based on the size, density, contrast factor and/or compressibility.

In an embodiment, the force applied to the cellular bodies may be a bulk acoustic force.

Single cell sorting devices are known in the art, such as the sorting device based on hydrodynamic sorting described in the article by Choi et al, Microfluidic deformability-activated sorting of single particles, Microsystems & Nanoengineering, 6, article number: 11 (2020), wherein cells are pushed through a narrow nozzle, which may be regarded as an interrogation point, at which the deformability of the cell may be measured. Based on a measured response, a sorting action is triggered by switching a sorting valve downstream of the interrogation point to send the cell to a specific receiving reservoir. Other sorting devices may include micromechanical single cell sorting devices based on MEMS technology as for example described in US9453787.

In an embodiment, the cellular bodies may include one or more of the following cells: Lymphocytes, monocytic cells, granulocytes, T cells, natural killer cells, B-Cells, CAR-T cells, dendritic cells, Jurkat cells , bacterial cells, red blood cells, macrophages, TCR Tg T-cells, OT-I / OT-II cells, splenocytes, thymocytes, BM derived hematopoietic stem cells, TILs, tissue derived macrophages, innate lymphoid cells; and/or, wherein the second cells include at least one of: tumor cells, stem cells, epithelial cells, B16 melanoma, fibroblasts, endothelial cells, HEK293, HeLa, 3T3, MEFs, HuVECs, microglia, neuronal cells.

The modules and systems described above may be configured to execute any of the method steps described in this application.

The invention may also relate to a computer program or suite of computer programs comprising at least one software code portion or a computer program product storing at least one software code portion, the software code portion, when run on a computer system, being configured for executing any of the method steps described above.

The invention may further relate to a non-transitory computer-readable storage medium storing at least one software code portion, the software code portion, when executed or processed by a computer, is configured to perform any of the method steps as described above.

The invention will be further illustrated with reference to the attached drawings, which schematically will show embodiments according to the invention. It will be understood that the invention is not in any way restricted to these specific embodiments.

Brief description of the drawings

Fig. 1 depicts a schematic of a force spectroscopy system according to an embodiment of the invention;
Fig. 2A and 2B schematically depict a flow cell for a force spectroscopy system according to an embodiment of the invention;
Fig. 3 depicts a schematic of a method for determining a property of a cellular body using a force spectroscopy system according to an embodiment of the invention;

**Fig. 4** depicts a schematic of a method for determining a property of a cellular body using a force spectroscopy system according to another embodiment of the invention;

**Fig. 5** depicts a force calibration method according to an embodiment of the invention;

**Fig. 6A-6C** depict a method of determining an acoustic force map according to an embodiment of the invention;

**Fig. 7** depicts an example of a force map;

**Fig. 8A** and **8B** depict experimental results obtained using methods described in this application.

**Fig. 9** depicts violin plots of the compressibility of blood cells measured using methods described in this application.

**Fig. 10** depicts a cell sorting method based on a cell property according to an embodiment of the invention.

**Fig. 11** depicts a cell sorting method based on a cell property according to an embodiment of the invention.

**Fig. 12** is a block diagram illustrating an exemplary data processing system that may be used for executing methods and software products described in this application.

Detailed description

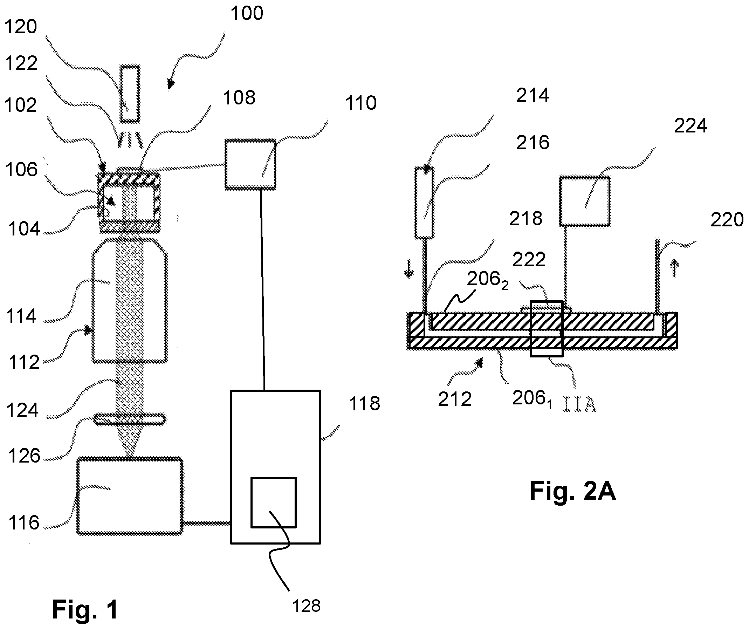

The embodiments below are intendent as non-limiting examples of the invention. **Fig. 1** schematically depicts an acoustic force spectroscopy system according to an embodiment of the invention. The acoustic force spectroscopy system **100** may comprise a sample holder **102** comprising a holding space **104** for holding a sample **106** comprising cellular bodies in a fluid medium, e.g. a liquid or a gel. The holding space may be part of a flow cell (also referred to as a microfluidic cell). Different flow cell architectures may be used to manipulate, e.g. insert, hold and remove cells. The system may further comprise a force field generator **108,** e.g. an acoustic wave generated based on a piezo element, connected to the sample holder **102** for generating a bulk acoustic wave in the holding space. The bulk acoustic wave will have an acoustic field gradient so that a force is exerted on cellular bodies that may be present in the holding space. The force field generator may be connected to a controller **110** so that the force exerted on the cellular bodies can be controlled.

The system of **Fig. 1** may further comprise an imaging system for imaging the processes in the holding space. The imaging system may include a microscope **112** including optics, e.g. adjustable objective **114,** and a camera **116** for capturing pictures, e.g. video frames, of the processes in the holding space. The imaging system may be connected to a computer **118** comprising a processor connected a memory comprising one or more software programs, which when executed, allow control of the different elements of the system.

The system may further comprise a light source **120** for illuminating the sample using any suitable optics (not shown) to provide a desired illumination intensity and intensity pattern, e.g. plane wave illumination, Köhler illumination, etc., known per se. Here, the light **122** emitted from the light source may be directed through the force field generator **108** to (the sample in) the sample holder **102** and sample light **124** from the sample is transmitted through the objective **114** and through an optional tube lens **126** and/or further optics (not shown) to the camera **116.** The objective and the camera may be integrated. In an embodiment, two or more optical detection tools, e.g. with different magnifications or different imaging modalities (e.g. bright field, dark field, fluorescence, etc.), may be used simultaneously for detection of sample light, e.g. using a beam splitter.

In another embodiment, not shown but discussed in detail in WO2014/200341, the system may comprise a partially reflective reflector and light emitted from the light source is directed via the reflector through the objective and through the sample, and light from the sample is reflected back into the objective, passing through the partially reflective reflector and directed into a camera via optional intervening optics. Further embodiments may be apparent to the reader.

The sample light may comprise light affected by the sample (e.g. scattered and/or absorbed) and/or light emitted by one or more portions of the sample itself e.g. by chromophores/fluorophores attached to the cellular bodies.

Some optical elements in the system may be at least one of partly reflective, dichroic (having a wavelength specific reflectivity, e.g. having a high reflectivity for one wavelength and high transmissivity for another wavelength), polarisation selective and otherwise suitable for the shown setup. Further optical elements e.g. lenses, prisms, polarizers, diaphragms, reflectors etc. may be provided, e.g. to configure the system **100** for specific types of microscopy.

The sample holder **102** may be formed by a single piece of material with a channel inside, e.g. glass, injection moulded polymer, etc. (not shown) or by fixing different layers of suitable materials together more or less permanently, e.g. by welding, glass bond, gluing, taping, clamping, etc., such that a holding space **106** is formed in which the fluid sample is contained, at least during the duration of an experiment.

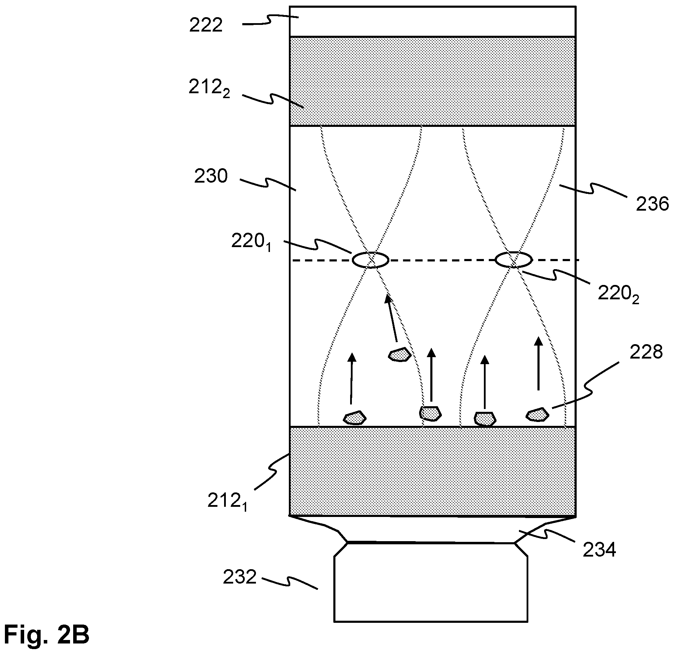

**Fig. 2A** and **2B** schematically depict cross-sectional views of a flow cell for an acoustic force spectroscopy system according to an embodiment of the invention. The sample holder **212** may comprise a first base part **206$_1$** that has a recess being, at least locally, U-shaped in cross section and a cover part **206$_2$** to cover and close (the recess in) the U-shaped part providing an enclosed holding space in cross section.

Further, the sample holder **212** may be connected to a fluid flow system **214** for introducing fluid and unbound cells into the holding space **206** of the sample holder and/or removing fluid from the holding space, e.g. for flowing fluid through the holding space (see arrows in **Fig. 2A** depicting the flow direction). The fluid flow system may be comprised in or part of a manipulation and/or control system including one or more of reservoirs **216,** pumps, valves, and conduits **218** for introducing and/or removing one or more fluids, sequentially and/or simultaneously. The sample holder and the fluid flow system may include connectors, which may be arranged on any suitable location on the sample holder, for coupling/decoupling. In **Fig. 2A** only a single entry and single exit channel for the fluidics system are shown but as will be apparent from the descriptions below multiple entry and exit channels may be provided and/or separately controlled. Examples of flow cells with multiple channels are described hereunder in more detail. Additionally, the flow cell may include a cell sorting device that is configured to sort cells. The sample holder may further include a force field generator **222,** e.g. an acoustic wave generator which may be implemented based on a (at least partially transparent) piezoelectric element connected to a controller **224.**

**Fig. 2B** schematically depicts a cross-section of part of the sample holder including objective **232** that is positioned underneath part of a sample holder (a chip) wherein the sample holder may comprise a capping layer $212_1$, a matching layer $212_2$, a fluid medium **230** contained in the holding space formed by the capping and the matching layer, and part of an acoustic force generator **222**, e.g. a piezo element, for generating an acoustic field gradient in the holding space. An immersion liquid **234** between the objective and the capping layer may be used to improve the optical numerical aperture (NA) of the imaging system. Application of an AC voltage to the piezo element at an appropriate frequency will generate a resonant bulk acoustic standing wave **236** in the sample holder. The standing wave will have nodes $220_{1,2}$ in the fluid layer at a certain height (this height may be referred to as the nodal plane here indicated with a dashed line) above the bottom of the sample holder. Cells **228** may be introduced into the holding space. If no force is applied, gravity will cause the cells to sink down to the bottom. In case the piezo element is turned on the cells will experience an acoustic force field. Cells that have a positive acoustic contrast factor with respect to the fluid medium will experience a pulling force towards to the nodes.

One or more software programs that run on the computer **118** of the force spectroscopy system may be configured to control the camera, the force field generator, the fluidics system and the flow cell to conduct different cell characterization and classification processes, including the determination of physical parameters of the cells and the classification. In some embodiments, the processes may also include sorting of individual (single) cells or cellular bodies based on one or more of these physical parameters. In that case, the flow cell may include a single cell sorting device. Embodiments that include cell sorting are described hereunder in more detail.

In a typical process, cells, may be flushed into the holding space of the flow cell and may provide a certain spatio-temporal response as a function of the force applied. Typically, the spatio-temporal response of the cells is analysed based on video frames that are captured by the camera during the process. To that end, the computer may include an image processing module **128** comprising one or more image processing algorithms for analysing the response of the cells when they are manipulated in the flow cell using the force field generator. In particular, the image processing module may be configured to identify cells in the images and track positions of identified cells in subsequent images. The tracked position may include both the position in the plane parallel to the bottom of the flow cell (e.g. the x-y plane, also referred to as the lateral position) as well as the position perpendicular to the bottom of the flow cell (e.g. the z-axis, also referred to as the axial direction). This information may be used by the controller to determine properties of the cellular bodies and/or to control the flow in one or more channels for e.g. transporting cells in or out the holding space. Further, in some embodiments, this information may be used by the controller to control other devices, such as e.g. a sorting device for sorting cells that are classified according to one or more physical cell properties. The image analysis of the video frames and the use of the information derived from the image analysis are described hereunder in greater detail.

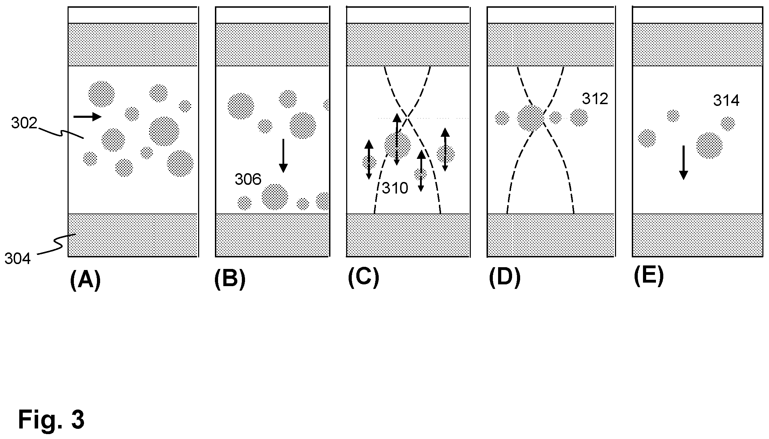

Fig. 3A-3E depict a schematic of a method for determining a physical property of a cellular body using an AFS system according to an embodiment of the invention. In particular, this figure illustrates a cross-section of part of a sample holder that may be similar to the one described with reference to **Fig. 2B**.

As depicted in the figure, the process may start with flushing a predetermined number of cellular bodies **302,** e.g. a plurality of cells, into the holding space of the microfluidic chip comprising a bottom wall **304**. After flushing, the cellular bodies may be allowed to sediment, wherein gravity may cause the cellular bodies **306** to sink and settle onto the bottom wall of the flow cell (**Fig. 3B**).

Thereafter, an acoustic generator, e.g. a piezo element, may be activated to generate an acoustic standing wave in the flow cell for a predetermined period of time, wherein the acoustic standing wave may have a node somewhere at predetermined height within the flow cell. The acoustic standing wave may cause an acoustic force field applied to the settled cells in a direction away from the functionalized wall surface (**Fig. 3C**). If the acoustic force field is sufficiently large, the cells **310** will quickly move (shoot up) towards an acoustic node away from the wall surface. When moving towards the acoustic node, the cells will feel a drag force which is referred to as the Stokes force. Thus, when the acoustic force field is turned on, cells move with a certain velocity towards the acoustic node, wherein the speed is depended on the acoustic force $F_{ac}$ the gravitational force $F_{grav}$, the buoyancy force $F_{buoy}$ and the Stokes drag force $F_{drag}$:

$$F_{grav} = -\frac{4}{3}\pi r_P^3 \rho_P g \qquad (1)$$

$$F_{buoy} = \frac{4}{3}\pi r_P^3 \rho_f g \qquad (2)$$

$$F_{drag} = -6\pi r_P \eta_f \lambda_{\text{Brenner}}(z) v_{\text{up}} \qquad (3)$$

wherein $r_P$ is the size of a cellular body (a particle), $\rho_P$ the density and $\rho_f$ are the densities of the cellular body and of the surrounding fluid respectively. Further, $v_{\text{up}}$ is the shooting up velocity and $\lambda_{\text{Brenner}}(z)$ is a viscosity correction for a cellular body at a height z from the wall surface of the holding space according to Brenner's law. This correction factor may be approximated by the following expression:

$$\lambda_{\text{Brenner}}(z) = \left(1 - \frac{9}{8}\left(\frac{r_P}{z}\right) + \frac{1}{2}\left(\frac{r_P}{z}\right)^3 - \frac{57}{100}\left(\frac{r_P}{z}\right)^4 + \frac{1}{5}\left(\frac{r_P}{z}\right)^5 + \frac{7}{200}\left(\frac{r_P}{z}\right)^{11} - \frac{1}{25}\left(\frac{r_P}{z}\right)^{12}\right)^{-1}$$

$$(4)$$

The acoustic force $F_{ac}$ exerted on a cellular body depends on the size of the cellular body, the acoustic contrast factor $\varphi_P(\rho_P, \rho_f, \beta_P, \beta_f)$ and the acoustic field gradient $E_{ac}\sin(kz)$:

$$F_{ac} = -\frac{8}{3}\pi r_P^2 k \varphi_P(\rho_P, \rho_f, \beta_P, \beta_f) E_{ac}\sin(kz) \qquad (5)$$

Wherein, $\beta_P$ and $\beta_f$ are the compressibilities of the cellular body and of the surrounding fluid respectively. Further, the acoustic contrast factor $\varphi_P(\rho_P, \rho_f, \beta_P, \beta_f)$ of a cellular body may be defined as follows:

$$\varphi_P = \frac{5\rho_B - 2\rho_f}{2\rho_B + \rho_f} - \frac{\beta_P}{\beta_f} \qquad (6)$$

The acoustic contrast factor defines how the acoustic wave interacts with the cellular body. In case the contrast factor is larger than 0, a cellular body will move towards an acoustic node, if it is smaller than 0 it will move away from the acoustic node. In some embodiments, the acoustic field gradient $2kE_{ac}\sin(kz)$ in the holding space may be inhomogeneous in the 3D space of the holding space. In that case, the acoustic field gradient may depend on the position x,y,z in the holding space: $2kE_{ac}(x,y)\sin(kz)$. In that case, a calibration process is needed to determine the force applied to a cellular body at a certain position in the holding space. Equations (1)-(6) may be used to model certain behavior of the cellular bodies and to fit experimental data to such models.

Once all cells **312** are accumulated at the acoustic node (**Fig. 3D**), the acoustic force may be switched off and gravity may cause the cells to sink down towards the bottom wall of the flow cell (**Fig. 3E**). During this process, the speed of the cells will depend on the gravitational force and the buoyancy force.

During the process depicted in **Fig. 3**, in particular during the steps illustrated in Fig. 3C-3E, the position of cells in the z-direction (trajectories in the z direction) may be determined and tracked using known image capturing techniques including video and/or other time-resolved methods (e.g. methods such as described in WO 2014/200341). In particular, trajectories which are determined when the cells are shot up towards the node (as depicted in **Fig. 3C**) may be used to determine a velocity for each cell. Similarly, trajectories determined when the cells sink down (as depicted in **Fig. 3E**) may be used to determine a density of each cell. Then, based on the density, the equations that govern the movement of the cells in the fluid of the holding space (which may include Brenner's law, which describes the effective viscosity change as a function of the particle height z to the bottom surface of the holding space), the compressibility of each cell may be accurately determined. The steps described with reference to Fig. 3C-3E may be repeated several times for acoustic force field pulses of different magnitude.

The process depicted in Fig. 3A-3E provides a very efficient and accurate method of determining the compressibility of cellular bodies, i.e. a measure of how the volume of a cellular body changes in response to external pressure changes, which is an important property in the diagnostics and study of cancer, cytoskeletal diseases and other shape and mechanics-altering diseases, e.g. sickle cell anemia. The method provides a label- and contact-free technique that allows characterization and classification of a large number of cellular bodies, which may be an heterogenous set of cellular bodies in terms of their density and/or compressibility. In contrast to the prior art, no complex modelling assumptions about the flow cell are required to fit the data. Therefore, the scheme may produce robust results in complex and non-ideal biological systems. The scheme allows separate determination of the cell density and the cell compressibility.

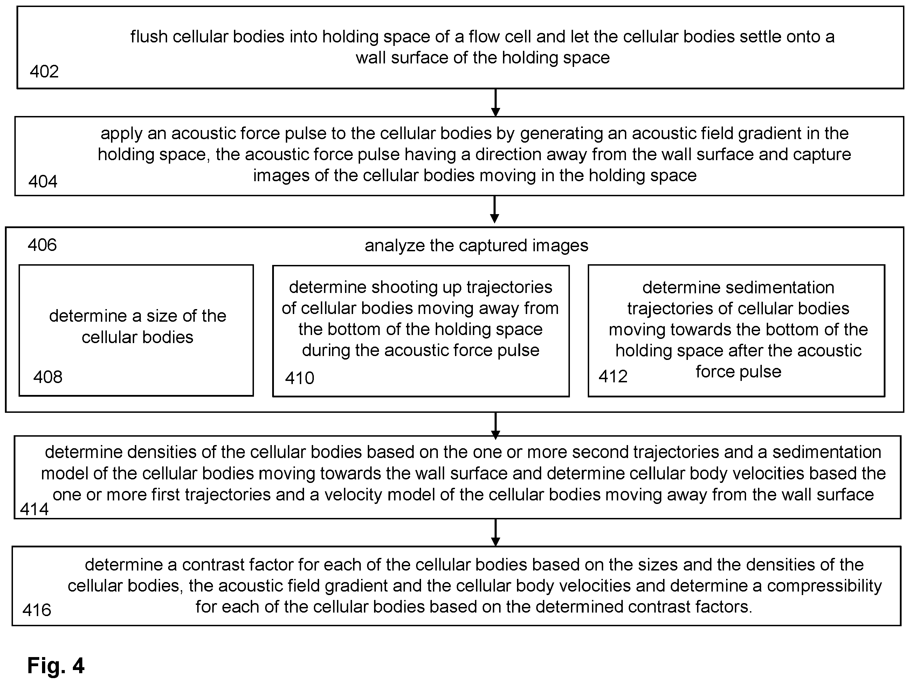

**Fig. 4** depicts a method of determining the compressibility of a cellular body according to an embodiment of the invention. The method may start with flushing cellular bodies of interest into a holding space of a flow cells that is in contact with an acoustic force generator (step **402**). Once the cellular bodies are settled onto the (bottom) wall surface of the holding space, one or more acoustic force pulses may be applied to the cellular bodies by generating one or more acoustic gradients in the holding space. The acoustic pulses will force the cellular bodies away from the wall surface in the direction of an acoustic node. During and after each of the acoustic force pulses, images are captured of the cellular bodies that move in the holding space (step **404**). Subsequently, the spatio-temporal behavior of the cellular bodies during and after each force field pulse may be analyzed by an image processing module (step **406**).

Images, i.e. a sequence of video frames, of the process may be obtained using an imaging technique, such as bright field imaging, as described with reference to **Fig. 1** and **2**. Based on the captured images, the image processing module may analyze the images and determine certain cell parameters based on the analysis. For example, the image processing module may determine the size e.g. a radius $r_P$ of the cellular bodies on the basis of the images, in particular on the basis of images where cellular bodies are in focus (step **408**). To that end, the image processing module may use well-known imaging techniques, such as an edge-detection algorithm, to identify pixel groups, e.g. blobs, in each image, that represent cellular bodies and to determine a size of the cellular bodies based on the identified pixel groups.

Further, the image processing module may determine the position of each identified cellular body, in the x,y dimension using well-known tracking algorithms such as e.g. cross-correlation and a quadrant-interpolation algorithms. For z dimension similar to prior work, a look-up-table (LUT) with images of each cell at different z position may be pre-recorded. The images of the tracked cells at every moment of the experiment may then be compared to the ones stored in the LUT to determine the precise z coordinate. Examples of tracking algorithms are described for example in the article by Van Loenhout et al, Non-bias-limited tracking of spherical particles, enabling nanometer resolution at low magnification. Biophys. J. 102, 2362-2371 (2012) for tracking in the x-y plane and the article by Gosse et al, Magnetic tweezers: micromanipulation and force measurement at the molecular level. Biophys. J. 82, 3314-3329 (2002) for tracking in the z-direction. These documents may be inserted by reference in this application.

This way, a trajectory for each cellular body moving through the holding space may be determined. Thus, based on the determined positions of the cellular bodies in subsequent images, trajectories of cellular bodies that are shot up during the acoustic force field pulse may be determined (step **412**). These trajectories may be referred to as shooting-up trajectories. In a similar way, trajectories of cellular bodies that sink down after the acoustic force field pulse may be determined (step **410**). These trajectories may be referred to as sedimentation trajectories.

Thereafter, densities of the cellular bodies may be determined based on fitting the sedimentation trajectories to a sedimentation model and velocities of the cellular bodies during a force pulse may be determined based on fitting the shooting up trajectories to a velocity model (step **414**). Therefore, the presented method allows for the determination of cell bodies compressibilities just by a simple linear fitting and densities by a non-linear least-square fitting with one parameter, followed by a subsequent implementation of fit values in well-known analytical equations. This is in contrast to previous methods which required extensive simulations in order to model the local acoustic field gradients inside a particular flow cell.

During sedimentation, no force is applied to the cellular bodies and the cellular bodies will sink down under the gravity force $F_{grav}$, the buoyancy force $F_{buoy}$ and the Stokes drag force $F_{drag}$. Based on the force balance $F_{grav} + F_{buoy} + F_{drag} = 0$ and the associated formulas (1)-(3), one can derive that the density of the cellular body $\rho_P$ may be expressed in terms of the sink down velocity $v_s$:

$$\rho_{\mathrm{P}} = \frac{9\eta_{\mathrm{f}}v_{\mathrm{s}}}{2g\,r_{\mathrm{P}}^2} + \rho_{\mathrm{f}} \qquad\qquad (7)$$

wherein $\eta_f$ is the fluid viscosity and $\rho_f$ the fluid density

The sink-down velocity $v_s$ for the cellular bodies may be determined based on the sedimentation trajectories obtained by the analyses of the images. In particular, the sink-down velocity for a cellular body may be determined by fitting data of a sedimentation trajectory of a cellular body to a sedimentation model, which describes the sedimentation of the cellular body in the fluid, which may take into account that the viscosity of the fluid close to the channel bottom surface may be different from the viscosity further away from the channel bottom surface . An example of such sedimentation model may be defined in terms of an expected theoretical sedimentation height z(t):

$$z(t) = \frac{v_s t}{\lambda_{\text{Brenner}}(z)} + r_{\text{P}} \tag{8}$$

wherein $r_{\text{P}}$ is the radius of the cellular body, z the distance from the bottom of the channel up to the middle of the cellular body and $\lambda_{\text{Brenner}}(z)$ is the viscosity correction factor based on Brenner's law, describing the effective viscosity change as a function of the particle height z to the bottom surface of the holding space as described with reference to equation (4) above. Based on the computed sinking down velocity $v_s$, the density $\rho_{\text{P}}$ of the cellular body may be computed using equation (7) above.

Thus, the sedimentation velocities of the cellular bodies may be determined based on the sedimentation trajectories and the sedimentation model which takes into account a non-constant viscosity as a function of a distance to the wall surface, for example the non-constant viscosity according to Brenner's law; and the densities of the cellular bodies may be determined based on the sedimentation velocities and a mathematical relation between a density of a cellular body and a sedimentation velocity of the cellular body as for example provided by equation 7 above.

Finally, contrast factors of the cellular bodies may be determined based on the cellular body densities, the force applied to the cellular bodies and the cellular body velocities and the compressibility of the cellular bodies may be determined based on the thus determined contrast factors (step **416**).

When an acoustic force pulse is applied to the cellular bodies via a generated acoustic field gradient, the cellular bodies will move towards the acoustic node at a certain velocity $v_{\text{P}}$. This velocity of each cellular body may be determined based on the shooting-up trajectories and is needed to determine the contrast factor of a cellular body:

$$\varphi_{\text{P}}(\rho_{\text{P}}, \rho_{\text{f}}, \beta_{\text{P}}, \beta_{\text{f}}) = \frac{6\pi r_{\text{P}} \eta_{\text{f}} \lambda_{Brenner}(z) v_{\text{P}} + \frac{4}{3}\pi r_{\text{P}}^3 (\rho_{\text{P}} - \rho_{\text{f}}) g}{\frac{8}{3}\pi r_{\text{P}}^3 E_{ac} k \sin(kz)} \tag{9}$$

wherein $E_{ac} k \sin(kz)$ is the acoustic field gradient in the holding space. Thus, when an acoustic force pulse is applied to the cellular bodies, the cellular bodies will shoot up towards the node of the standing acoustic wave generated in the holding space. The shooting-up trajectory, which describes the position change of a cellular body as a function of time, may be well described by a velocity model described in the article by Nguyen et al. as referred to in the background of this application. This formula, which is based on a sinusoid multiplied by correction factor that is based on Brenner's law, may be used to fit the trajectories and derive a velocity for each cellular body.

A less computational resource demanding and more robust linear fitting of the mid-height particle velocity $v_{\text{mid-height}}$ yields good results. To correct for the gravity, buoyancy and the Brenner's effect, the following formula is used to convert the measured $v_{\text{mid-height}}$ into a corrected velocity $v_{\text{corr}}$:

$$v_{\text{corr}} = \frac{\left(6\pi r_{\text{P}} \eta_{\text{f}} \lambda_{\text{B}}(z_{\text{mid-height}}) v_{mid-height} + \frac{4}{3}\pi r_{\text{P}}^3 (\rho_{\text{P}} - \rho_{\text{f}}) g\right)}{6\pi r \eta \lambda_{\text{Brenner}}(z_{\text{mid-height}})} \tag{10}$$

After deriving the velocities, the contrast factors of the cellular bodies may be computed from the equation (9). These values may then be used to determine the compressibility $\beta_{\text{P}}$ of the cellular bodies using the equation for a contrast factor:

$$\beta_{\text{P}} = \left(\frac{5\rho_{\text{P}} - 2\rho_{\text{f}}}{2\rho_{\text{P}} + \rho_{\text{f}}} - \varphi_{\text{B}}\right)\beta_{\text{f}} \tag{11}$$

When generating an acoustic field in a holding space of a flow cell of certain dimensions and shape, the acoustic field gradient may have an inhomogeneous distribution. In that case, to determine a force applied to a cellular body at position (x, y) in the holding space of the flow cell, a force calibration may be used to determine the force applied to a cell taken into account the inhomogeneous distribution of the acoustic field. For example, the system may determine locations in the holding space where cellular bodies are settled after sedimentation (sediment locations (x,y) and a force map or an acoustic field gradient map of the holding space to determine the force applied to a cell at position (x,y,). A similar approach may be used for the 3D case, wherein the acoustic field gradient in the holding space may be inhomogeneous in three dimensions.

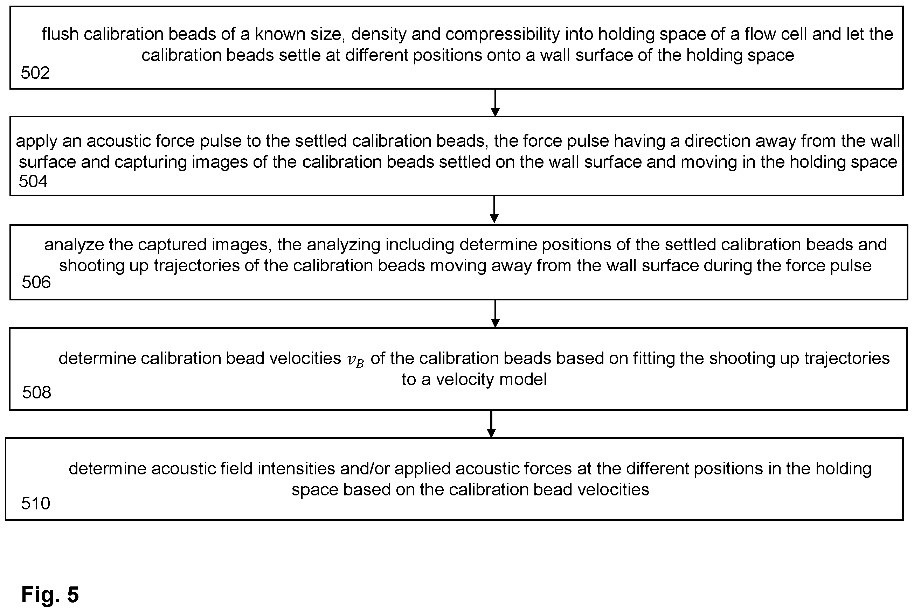

**Fig. 5** depicts a flow diagram of a force calibration method that may be used to determine the forces applied to cellular bodies in different positions of the holding space. For the calibration method, calibration particles ("beads") may be used of a known size, density and compressibility. Further, the method may be executed using a fluid of a known viscosity, density and compressibility. This way, the contrast factor for the calibration beads $\varphi_B(\rho_B, \rho_f, \beta_B, \beta_f)$ is fully determined.

The calibration method may start with introducing a plurality of calibration beads of known properties into the holding space (step **502**) with a fluid of known properties. The calibration beads may sink down to the bottom of the holding space at different positions on the bottom wall of the holding space. Thereafter, the acoustic field generator may be switched on and off to create one or more acoustic field pulses in the holding space. This way, a force pulse is applied to the settled calibration beads, having a direction away from the wall surface so that the calibration beads will be shot up towards nodes of the acoustic field in the holding space. During this process, images of the calibration beads settled on the wall surface and moving in the holding space may be captured (step **504**). Subsequently or simultaneously, an image processing module may analyze the spatio-temporal behavior of the cellular bodies based on the captured images, wherein the analyzing may include determining positions of the settled calibration beads and determining shooting up trajectories of the calibration beads moving away from the wall surface (step **506**). Based on the shooting up trajectories, calibration bead velocities $v_B$ of the calibration beads may be determined based on fitting the trajectories to a velocity model (step **508**), e.g. a model as described above with reference to equation (10). Thereafter, based on the calibration bead velocities, acoustic field gradients at different positions in the holding space may be determined (step **510**) by the following expression:

$$2kE_{ac}(x,y)\sin(kz) = \frac{6\pi r_B \eta_f \lambda_{Brenner}(z) v_B + \frac{4}{3}\pi r_B^3 (\rho_P - \rho_f)g}{\frac{4}{3}\pi r_B^3 \varphi_B(\rho_B, \rho_f, \beta_B, \beta_f)} \qquad (12)$$

Thus, based on the determined acoustic field gradients, a force map may be used in the determination of the compressibility according to the scheme as described with reference to **Fig. 4**. Hence, in that case, a position dependent acoustic field intensity $E_{ac}(x,y)$ may be used to determine the acoustic contrast factor of a cellular body:

$$\varphi_P(\rho_P, \rho_f, \beta_P, \beta_f) = \frac{6\pi r_P \eta_f \lambda_{Brenner}(z) + \frac{4}{3}\pi r_P^3 (\rho_P - \rho_f)g}{\frac{8}{3}\pi r_P^3 E_{ac}(x,y)k\sin(kz)} \qquad (13)$$

Based on the position dependent acoustic field gradients an acoustic field gradient map or an acoustic force map may be determined. Such map may be determined for a particular flow cell geometry. The map may be stored in a memory of a processor of the AFS system so that it can use the map during the execution of one of the processes according to the embodiments in this application.

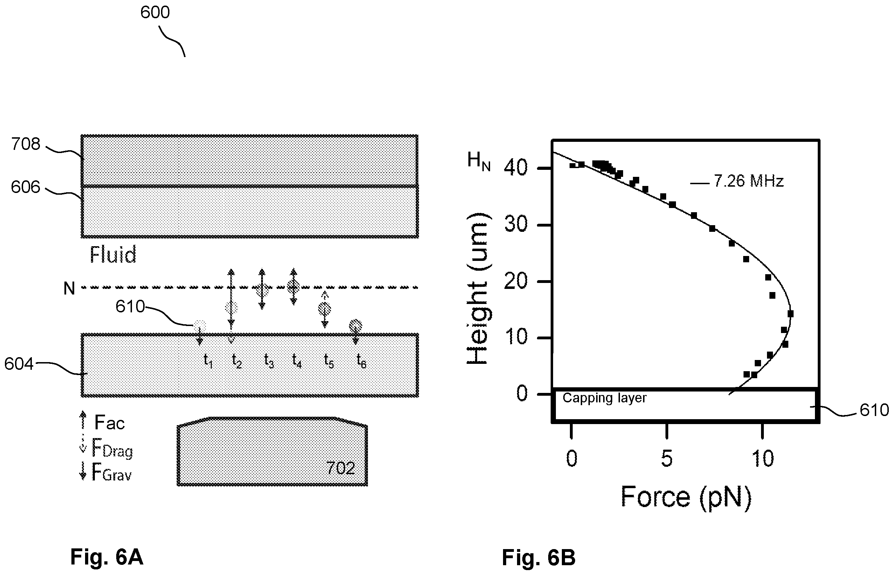

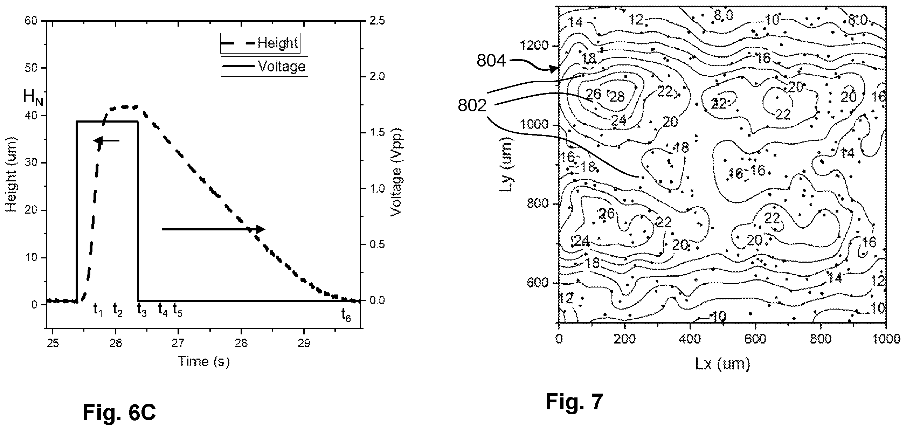

**Fig. 6A-6C** depict a method of determining an acoustic force map according to an embodiment of the invention. Typically, the acoustic force may not be distributed evenly over the holding space but that local force variations may occur. For example, forces at the edges of the holding space may be smaller than forces in the centre. The figure illustrates a method to characterise such variations in force. **Fig. 6A** shows a cross-section of a sample holder **600** including a microscope objective **602** and a liquid filled holding space formed between a capping layer **604** and a matching layer **606** as e.g. described with reference to **Fig. 2B**. In the sample fluid a schematic of a calibration particle **610** is indicated. The picture illustrates a movement of the particle subject to an acoustic force burst and forces acting on the particle at (six) different time instances $t_1...t_6$. The force is acting in the direction perpendicular to the surface of the capping layer. **Fig. 6B** shows the acoustic force as a function of height in the holding space between the surface of a wall of the sample holder (height = 0) and a node at height $H_N$ during the acoustic burst and measured particle positions. **Fig. 6C** shows the temporal behavior of the driving signal burst Vpp (right axis) and the height of a particle in a sample holder (left axis).

At time instance $t_1$, no acoustic force is applied, and a particle, a bead, may be at rest on the surface of the wall of the sample holder (marked as capping in **Fig. 2B**) under the influence of the net downward forces of gravity and buoyancy $F_{Grav} + F_{buoy}$. Then, at time instances $t_2$-$t_3$, an acoustic wave is generated in the sample holder providing a burst of acoustic force $F_{ac}$ driving the particle away from the surface towards the node (cf. **Fig. 2B**).

When moving, the particle is now also subject to a drag force $F_{Drag}$ counteracting the movement and $F_{ac} > (F_{Grav} + F_{buoy} + F_{Drag})$. As long as the total force on the particle is positive, i.e. $F_{tot} = (F_{Grav} + F_{buoy}) + F_{Drag} + F_{ac} > 0$ the particle accelerates upward. The drag force $F_{Drag}$ may be velocity dependent (assuming a spatially and temporally homogeneous sample fluid) and this quickly balances the other forces and the particle keeps moving at a constant velocity, i.e. $F_{tot} = (F_{Grav} + F_{buoy}) + F_{Drag} + F_{ac} = 0$. Furthermore, the acoustic force $F_{ac}$ is height dependent, see **Fig. 6B.**

At time instance $t_4$, the acoustic wave and hence the acoustic force is still present, but the particle has come to rest close to the node N; $F_{Drag} = 0$ and $F_{ac} = (F_{Grav} + F_{buoy})$. At time instance $t_5$, the driving signal is stopped, so that the acoustic wave and hence the acoustic force are absent. The particle now falls back to the wall, counteracted by the drag force $F_{Drag}$. $(F_{Grav} + F_{buoy}) > F_{Drag}$ and $F_{tot} = (F_{Grav} + F_{buoy}) + F_{Drag} < 0$ (i.e.: downward). Finally, at time instance

$t_6$ no acoustic force is applied and the particle is again at rest on the surface of the wall of the sample holder (the capping layer) under the influence of the net downward forces of gravity and buoyancy $F_{Grav} + F_{buoy}$. By detecting the velocity of the particle, the acoustic force may be determined on the basis of the Navier-Stokes equations. Note that the same force determination may hold for any lateral displacement of the particle.

**Fig. 6B** shows that an acoustic model (solid line) for a force on the test particle may be fitted to the data. This allows one or more of interpolation, extrapolation and determination of the force at any specific height between the capping layer and the node. Using a repeating, possibly periodic, driving signal and possibly a small lateral force in one or two directions parallel to the surface and/or perpendicular to the direction of the acoustic force, an acoustic force at many different positions in the holding space distributed in one or two directions perpendicular to the acoustic force direction may be determined. The thus determined force values may be used to determine a force map of the active region of the holding space. Preferably, by probing many test particles in parallel a force map may be acquired more quickly.

An example of such force map is depicted in **Fig. 7** wherein black dots show a large number of spatially distributed test particles **702** in a holding space (viewed from the top). In this example, a 1x PBS (Phosphate-buffered saline) solution supplemented with 0.02% w/v Pluronic f127 plus 0.02% w/v Casein solution was used as a sample fluid. The sample temperature was kept in a range of 25-37 degrees Celsius, and the particles were silica beads of ca 10.1 micrometer diameter (standard deviation 0.1 micrometer).

Using a single driving signal burst / acoustic force burst as indicated with respect to **Fig. 6A-6C,** the force on all test particles may be probed simultaneously, allowing establishing a force map exposing local force variations. Using a repeating, possibly periodic, driving signal more data may be obtained and the map may become even more accurate and/or detailed. Given sufficient homogeneity of the test particles, statistical information like averages, standard deviations of and/or local patterns and/or global patterns in the force distribution may be simply determined, otherwise averages and pattern may be (or: may have to be) calculated on the basis of results calculated independently for each of plural particles to be included in the determination of the average and/or the pattern.

The contour lines **704** in **Fig. 7** indicate curves in the 2D plane for which the force on a test particle at a given power applied to the acoustic generator is the same. The numbers indicate relative forces on the test particles. A force map as shown in **Fig. 7** has proven to be largely sample holder specific and largely constant over time and may be stored in a memory associated with a sample holder identifier and/or a chip identifier. Other parameters such as temperature and sample medium may also affect the force map and maybe also taken into account.

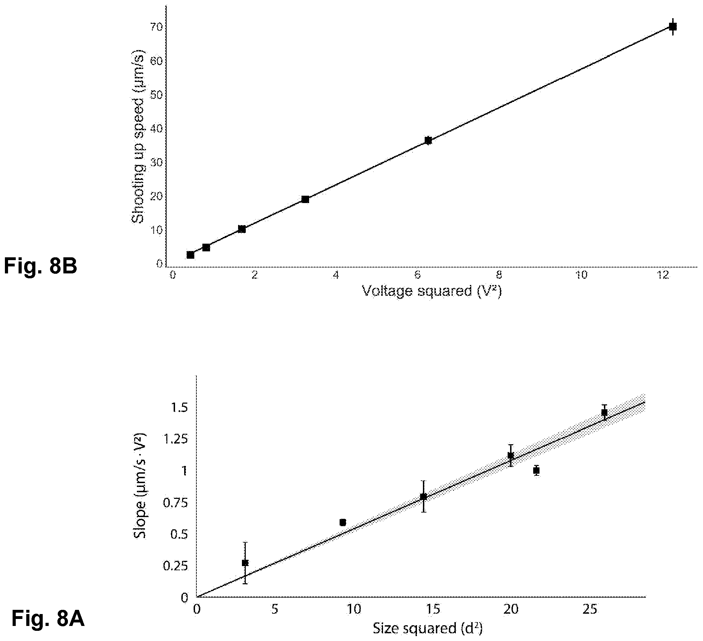

**Fig. 8A** and **8B** depict experimental results obtained using the methods described in this application. In particular, **Fig. 8A** depicts a graph of the shooting up speed of 4.65 um polystyrene beads as a function of the voltage squared, $V^2$, i.e. the voltage applied to the piezo-electric element, which is a measure for the acoustic field intensity that is applied to beads. As shown in the graph, the response, i.e. the shooting up speed of the beats, at different voltages linearly depends on the voltage squared as predicted by the theory. Similarly, **Fig 8B** depicts a graph for testing the theoretical linear dependency of response of the beads as a function of the size squared $r^2$ of the particles. Polystyrene beads of different sizes were measured by applying acoustic pulses and measuring their response in terms of a shooting-up velocity. The graph confirms the that expected linear response is in line with the experimental data.

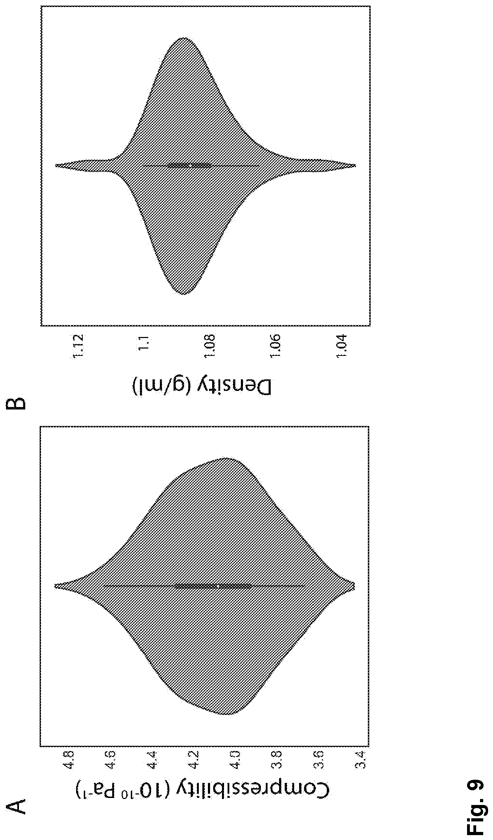

**Fig. 9** depicts violin plots of the compressibility of blood cells (neutrophils) measured with high precision using the methods described in this application. The experimentally calculated compressibility value: $4.25 \pm 0.01$ 10-10 Pa-1 and density $1.085 \pm 0.002$ g/ml are in agreement with values in expected ranges for cells.

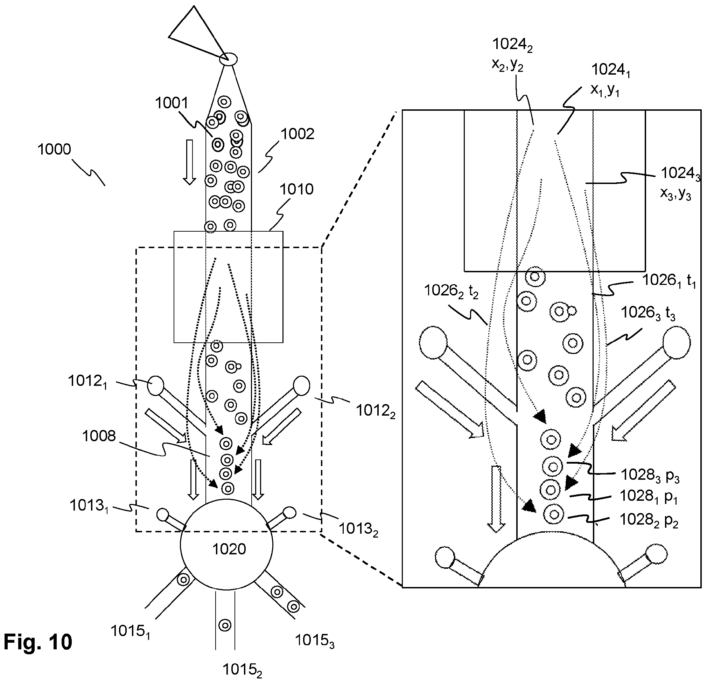

**Fig. 10** depicts a cell sorting method based on a cell property, such as the compressibility, according to an embodiment of the invention. In particular, **Fig. 10** depicts an example of a flow cell architecture that may be used to sort single cells based on a cell property or cell properties, such as size, density and/or compressibility. As shown in the figure, the flow cell **1000** may include a channel **1002** including an input and an output, wherein the output may be connected to a cell sorting device **1020**. The channel may be a holding space to hold cellular bodies in a fluid, wherein a part may be configured as an acoustically active part **1010** of the holding space that is indicated by the square in the figure. This flow cell configuration may be used to execute a cell manipulation process which includes exerting a force to cells that are settled on a (bottom) wall surface similar to the process described above with reference to **Fig. 1-3.** Force pulses will be exerted on the cellular bodies which will cause the cellular bodies shoot up away from the wall surface and after a pulse cellular bodies will move again towards the wall surface under influence of gravity.

After the application of the one or more force pulses, the cell manipulation process may include transporting the cellular bodies to the sorting device **1020** to sort the cellular bodies based on one or more cell properties. The transporting of the cellular bodies to the sorting device may for example be achieved by establishing a flow from the entry port to the exit port. The manipulation of the cells in the flow cell may be captured by a camera and images may be processed and analysed in real-time and based on the information in the images.

The output side of the flow channel may include (or be connected to) a sorting device that may be configured to sort cells on the single cell level. To that end, in some embodiments, the output side of the second channel may include means to focus detached cells originating from the holding space into a stream of single cells as depicted in the figure. For example, in an embodiment, the walls of the output side of the channel may include flow outlets $1012_{1,2}$, which may be controlled to realize a laminar sheath flow along the walls of the channel. As will be described hereunder in more detail, this laminar sheath flow may be used to manipulate and focus the cells into a stream of single cells. Alternatively, for example, a tapered channel could also be used to focus cells into a single line (not shown). The cell sorting device **1020** may include means to move a cell into one of a plurality of reservoirs based on sorting criteria. For example, in case of a fluidic sorting device, the sorting device may include auxiliary flow inlets $1013_{1,2}$ to move a cell into one of a plurality of reservoirs / exit channels $1015_{1,2,3}$. The article by Choi et al., Microfluidic deformability-activated sorting of single particles, Microsystems & Nanoengineering, 6, article number: 11 (2020) , which hereby is incorporated by reference into this application, describes an example of such fluidic sorting device. By opening and closing valves that control the flow through the auxiliary flow inlets $1013_1$ and $1013_2$ cells can be forced to exit through exit channels $1015_1$, $1015_2$ or $1015_3$. If both $1013_1$ and $1013_2$ are open and the flux through these channels is similar the hydrodynamic flow causes cells to exit through exit channel $1015_2$. If $1013_1$ is closed and $1013_2$ is open, then the cells are pushed sideways to the left and exit through channel $1015_1$. If $1013_1$ is open and $1013_2$ is closed, then the cells are pushed to the right side and exit through channel $1015_3$.

The input and output(s) of the channel may be used to control a flow through the channel allowing cellular bodies **1001** to enter the channel and to settle onto settle onto the wall surface of the acoustically active area part of the channel. Thereafter, a force may be applied to the settled cells in the acoustically active part of the channel, so that the cellular bodies may be exposed to force pulses for probing their physical properties, in particular their mechanical properties may be determined as explained with reference to **Fig. 1-7.**

Thereafter, a flow through the channel may be controlled to transport detached cells in a direction to the sorting device **1020,** which is configured to sort each cell based on the determined properties. In some embodiments, during transport towards the sorting device, cellular bodies may be manipulated into a stream of single cells so that at each time instance one single cells can be processed (sorted) by the sorting device. Another effect of manipulating the cells into a single stream is that the cells will have a predetermined order in the stream. Thus, once the order of the cells in such a stream has been established (for example by an image processing algorithm). The sorting device can sort cells based on a known ordering of the cells without the need for real-time (low-latency) interaction between the image processing algorithm and the sorting device.

The cells may be distributed at different positions in the acoustically active part of the channel. Further, the cells may be a heterogenous population of cells of different sizes, densities, etc. so that cells are transported via different trajectories via the channel to the sorting device. This is schematically illustrated in the inset of **Fig. 10**, showing trajectories $t_{1-3}$ $1026_{1-3}$ of cellular bodies moving through the channel having different settling locations $X_{1-3}$ $1024_{1-3}$ and different cell properties $1028_{1-3}$ $p_{1-3}$.

In order to allow single cell sorting by the sorting device based on a cell property or cell properties, the position of the cellular bodies should be tracked when moving through the holding space. To that end, the image processor should be able to detect cellular bodies, determine their positions and track the positions of the cellular bodies while being transported to the sorting device.

After the application of the force pulses, cellular bodies may be detected, localized and classified on the basis of their physical properties using the above-described methods. This information may be stored by the computer and used to control the sorting device.

Further, when transporting the cellular bodies to the sorting device, locations and trajectories of detected cellular bodies in subsequent images may be determined by linking locations of cellular bodies for subsequent frames using a minimization algorithm, preferably a global minimization algorithm. For example, to efficiently link large numbers of detected cells in subsequent images a minimization of a cost function may be used as described in the article by Jaquaman et al, Robust single-particle tracking in live-cell time-lapse sequences, Nature Methods, Vol. 8, no. 8, August 2008, pp. 295-702, which is hereby incorporated by reference in this application. Alternatively, locations and trajectories of detected cells in subsequent images can be determined by following the location of detected particles in subsequent images. For example by updating the previous location by the new center of mass of the displaced blob or using a correlation to find the updated location, as described in the article by Cheezum et al, Quantitative comparison of algorithms for tracking single fluorescent particles Biophysical journal 81.4 2008, pp. 2378-2388. The trajectories will generate tracking paths from the active acoustic area towards the sorting device as illustrated in **Fig. 10.**

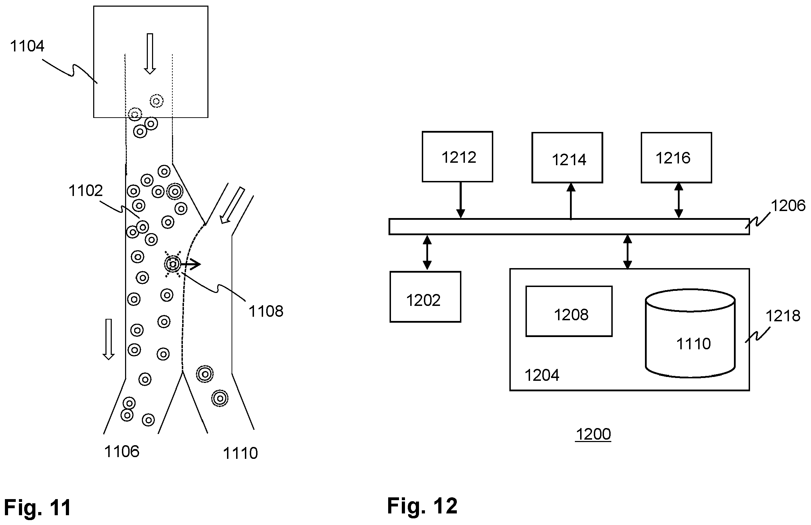

**Fig. 11** schematically depicts a cell sorting scheme according to another embodiment of the invention. In this embodiment, a single cell sorting method is used that does not necessarily require a focusing mechanism to manipulate the tracked cells into a single cell stream as e.g. described with reference to **Fig. 10.** Alternative sorting methods may be implemented that are based on parallel instead of serial sorting methods and therefore do not require focusing of cells into a single line. For example, in an embodiment, optical tweezers may be used to pick specific cells from one location and move it to another where it can be further separated based on any standard microfluidic method. An example of such sorting method is described by Zhang and Liu in Optical tweezers for single cells Hu, Interface, J. R. Soc. Interface (2008) 5, 671-690*).*

The figure depicts a part of a flow cell comprising a stream of cells **1102** originating from holding space **1104,** which can be acoustically activated. After the application of the force pulses and determination of their properties cells may be transported and tracked via a first laminar flow channel **1106** towards a sorting device comprising one or more optical trapping beams **1108** (drawn as two hourglass shaped dashed lines to indicate a focused laser beam). As long as the cellular bodies can be tracked from the location where their physical properties are determined all the way to the sorting area a controller may use the information on the position of the cellular bodies and the associated physical properties to pick a predetermined cell from the first laminar flow channel and move it into another second (parallel) flow channel **1110.** The boundary between the laminar flow channels is indicated as a dashed line.

The first channel may be a channel directly coming from the holding space carrying the cellular bodies. The second channel may for example be a channel which is flushed with clean buffer solution. Thus, cellular bodies are tracked from the physical property determination area to the sorting area where the optical trap can be controlled to pick out and sort the cellular bodies based on any combination of physical properties and other parameters. This may be achieved using one fast moving optical trap, e.g. using acousto-optical deflectors, or alternatively using many parallel traps, for example using holographic optical tweezers also described by Zhang and Liu).

In the embodiments described in this application unlabeled cellular bodies may be used. In that case, image detection and tracking of the cells in the flow cell may be based on images of the cells in the flow cells produced by brightfield microscopy. An example of such imaging detection and tracking process is described in pending Dutch application NL 2024155, with title *Determining interactions between cells based on force spectroscopy,* which is hereby incorporated by reference into this application. In another embodiment, some or all cellular bodies may be labelled using a suitable fluorescent label. In that case, the image detection and tracking of the cells in the flow cell may be based on images of the cells in the flow cells produced by fluorescent microscopy.

Fig. 12 is a block diagram illustrating exemplary data processing systems described in this disclosure. Data processing system **1200** may include at least one processor **1202** coupled to memory elements **1204** through a system bus **1206.** As such, the data processing system may store program code within memory elements **1204.** Further, processor **1102** may execute the program code accessed from memory elements **1204** via system bus **1206.** In one aspect, data processing system may be implemented as a computer that is suitable for storing and/or executing program code. It should be appreciated, however, that data processing system **1200** may be implemented in the form of any system including a processor and memory that is capable of performing the functions described within this specification.

Memory elements **1204** may include one or more physical memory devices such as, for example, local memory **1208** and one or more bulk storage devices **1210.** Local memory may refer to random access memory or other non-persistent memory device(s) generally used during actual execution of the program code. A bulk storage device may be implemented as a hard drive or other persistent data storage device. The processing system **1200** may also include one or more cache memories (not shown) that provide temporary storage of at least some program code in order to reduce the number of times program code must be retrieved from bulk storage device **1210** during execution.

Input/output (I/O) devices depicted as input device **1212** and output device **1214** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1216** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **1200.**

As pictured in **FIG. 12,** memory elements **1204** may store an application **1218.** It should be appreciated that data processing system **1200** may further execute an operating system (not shown) that can facilitate execution of the application. Application, being implemented in the form of executable program code, can be executed by data processing system **1200,** e.g., by processor **1202.** Responsive to executing application, data processing system may be configured to perform one or more operations to be described herein in further detail.

In one aspect, for example, data processing system **1200** may represent a client data processing system. In that case, application **1218** may represent a client application that, when executed, configures data processing system **1200** to perform the various functions described herein with reference to a "client". Examples of a client can include, but are not limited to, a personal computer, a portable computer, a mobile phone, or the like.

In another aspect, data processing system may represent a server. For example, data processing system may represent an (HTTP) server in which case application **1218,** when executed, may configure data processing system to perform (HTTP) server operations. In another aspect, data processing system may represent a module, unit or function as referred to in this specification.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

## Claims

1. Method for determining cell properties comprising:

   receiving, by a processor (118), images representing manipulation of cellular bodies (106) in a holding space (104), the holding space comprising a wall surface, the manipulating including exerting one or more acoustic force pulses to the cellular bodies provided on the wall surface based on generating one or more acoustic field gradients in the holding space, the force pulses having a direction away from the wall surface;

   analyzing, by the processor (118), the images, the analyzing including determining the size of the cellular bodies and tracking locations of the cellular bodies during each of the one or more acoustic force pulses and after each of the one or more acoustic force pulses, the tracking locations defining one or more first trajectories of the cellular bodies moving away from the wall surface and one or more second trajectories of the cellular bodies moving towards the wall surface;

   determining, by the processor (118), densities of the cellular bodies based on the one or more second trajectories and a sedimentation model of the cellular bodies moving towards the wall surface and determining cellular body velocities based the one or more first trajectories and a velocity model of the cellular bodies moving away from the wall surface; and,

   determining, by the processor (118), a contrast factor for each of the cellular bodies based on the sizes and the densities of the cellular bodies, the one or more acoustic field gradients and the cellular body velocities and determining a compressibility for each of the cellular bodies based on the determined contrast factors.

2. Method according to claim 1, wherein the analyzing of the images further comprises determining positions of cellular bodies and using a map of a non-homogenous acoustic field gradient in the holding space to determine acoustic field gradients at the positions of the cellular bodies, preferably the map comprising information associated with an acoustic field gradient as a function of the position, for example a 3D position, in the holding space.

3. Method according to claim 1 or 2, wherein determining the densities of the cellular bodies includes:

   determining sedimentation velocities of the cellular bodies based on the one or more second trajectories and the sedimentation model which takes into account a non-constant viscosity as a function of a distance to the wall surface, preferably the non-constant viscosity according to Brenner's law; and,

   determining the densities of the cellular bodies based on the sedimentation velocities and a mathematical relation between a density of a cellular body and a sedimentation velocity of the cellular body.

4. Method according to claim 3, wherein determining sedimentation velocities includes fitting the one or more second trajectories with the sedimentation model.

5. Method according to any of claims 1-4, wherein determining cellular body velocities includes:
   fitting the one or more first trajectories with the velocity model, the velocity model including a mathematical relation between a velocity of a cellular body in a fluid while a force is exerted to the cellular body using an acoustic field gradient, preferably the mathematical relation includes the effect of gravity and/or buoyancy and/or the effect of a viscosity chance of the fluid according to Brenner's law.

6. Method according to any of claims 1-5, wherein exerting one or more force pulses onto the cellular bodies includes generating, by an acoustic wave generator, the one or more acoustic field gradients in the holding space.

7. Method according to any of claims 1-6, wherein the method further includes classifying the cellular bodies based on the determined sizes, density and/or compressibilities.

8. A method for sorting cellular bodies by performing the method according to claim 1, wherein the holding space is a holding space of a flow cell and the flow cell comprises or is connected to a sorting device, wherein the manipulation further comprises transporting the cellular bodies to the sorting device, and wherein the method further comprises:

   - tracking the location of the cellular bodies during the transport of the cellular bodies to the sorting device; and, sorting the tracked cellular bodies by controlling the sorting device based on the size, density, contrast factor and/or compressibility.

9. A module for determining cell properties based image analysis, the module comprising a computer readable storage medium having computer readable program code embodied therewith, and a processor, preferably a microprocessor, coupled to the computer readable storage medium, wherein responsive to executing the computer readable program code, the processor is configured to perform executable operations comprising:

   receiving images representing manipulation of cellular bodies in a holding space, the holding space comprising a wall surface, the manipulation including exerting one or more acoustic force pulses to the cellular bodies provided on the wall surface based on generating one or more acoustic field gradients in the holding space, the force pulses having a direction away from the wall surface;
   analyzing the images, the analyzing including determining the size of the cellular bodies and tracking locations of the cellular bodies during each of the one or more acoustic force pulses and after each of the one or more acoustic force pulses, the tracking locations defining one or more first trajectories of the cellular bodies moving away from the wall surface and one or more second trajectories of the cellular bodies moving towards the wall surface;
   determining densities of the cellular bodies based on the one or more second trajectories and a sedimentation model of the cellular bodies moving towards the wall surface and determining cellular body velocities based the one or more first trajectories and a velocity model of the cellular bodies moving away from the wall surface; and, determining a contrast factor for each of the cellular bodies based on the sizes and the densities of the cellular bodies, the one or more acoustic field gradients and the cellular body velocities and determining a compressibility for each of the cellular bodies based on the determined contrast factors.

10. A system for determining cell properties comprising:

   a flow cell comprising a holding space (104) for cellular bodies (106);
   a force generator (222) for applying acoustic force pulses to the cellular bodies;
   an imaging system (116) for capturing images of the cellular bodies in the flow cell;
   an image processing system (128) for processing the captured images;
   a controller for controlling the flow cell and the sorting device; and,
   a module according to claim 9.

11. A system for sorting cells based on cell properties comprising:

   a flow cell comprising a holding space (104) for cellular bodies (106);
   a sorting device (1020) connected to the flow cell;
   a force generator (222) for applying a force to the cellular bodies;
   an imaging system (116) for capturing images of the cellular bodies in the flow cell;
   an image processing system (128) for processing the captured images;
   a controller for controlling the flow cell and the sorting device; a module according to claim 9,
   wherein the manipulation further includes transporting the cellular bodies to the sorting device, and
   wherein the executable operations further comprise:

   - tracking the location of the cellular bodies during the transport of the detached cellular bodies to the sorting device; and, sorting the tracked cellular bodies by controlling the sorting device based on the size, density, contrast factor and/or compressibility.

12. A computer program or suite of computer programs comprising at least one software code portion or a computer program product storing at least one software code portion, the software code portion, when run on a computer system, being configured for executing the method steps according any of claims 1-8.

**Patentansprüche**

1. Verfahren zur Bestimmung von Zelleneigenschaften, das Folgendes aufweist:

   Empfangen von Bildern, die die Manipulation von Zellkörpern (106) in einem Halteraum (104) darstellen, durch einen Prozessor (118), wobei der Halteraum eine Wandoberfläche aufweist, und die Manipulation ein oder mehrere akustische Kraftimpulse auf die an der Wandoberfläche bereitgestellten Zellkörper aufweist, basierend auf der Erzeugung eines oder mehrerer akustischer Feldgradienten im Halteraum, wobei die Kraftimpulse eine Richtung weg von der Wandoberfläche haben;
   Analysieren der Bilder durch den Prozessor (118), wobei die Analyse die Bestimmung der Größe der Zellkörper und das Verfolgen der Positionen der Zellkörper während jedes der ein oder mehreren akustischen Kraftimpulse und nach jedem der ein oder mehreren akustischen Kraftimpulse aufweist, wobei die Verfolgung der Positionen eine oder mehrere erste Trajektorien der sich von der Wandoberfläche wegbewegenden Zellkörper und eine oder mehrere zweite Trajektorien der sich zur Wandoberfläche hin bewegenden Zellkörper definiert;
   Bestimmen der Dichten der Zellkörper durch den Prozessor (118) basierend auf den einen oder mehreren zweiten Trajektorien und einem Sedimentationsmodell der sich zur Wandoberfläche hin bewegenden Zellkörper und Bestimmen der Zellkörpergeschwindigkeiten basierend auf den einen oder mehreren ersten Trajektorien und einem Geschwindigkeitsmodell der sich von der Wandoberfläche wegbewegenden Zellkörper; und
   Bestimmen eines Kontrastfaktors für jeden der Zellkörper durch den Prozessor (118) basierend auf den Größen und den Dichten der Zellkörper, den einen oder mehreren akustischen Feldgradienten und den Zellkörpergeschwindigkeiten und Bestimmen einer Kompressibilität für jeden der Zellkörper basierend auf den bestimmten Kontrastfaktoren.

2. Verfahren nach Anspruch 1, wobei das Analysieren der Bilder weiter die Bestimmung der Positionen der Zellkörper und die Verwendung einer Karte eines inhomogenen akustischen Feldgradienten im Halteraum zur Bestimmung der akustischen Feldgradienten an den Positionen der Zellkörper aufweist, vorzugsweise wobei die Karte Informationen in Verbindung mit einem akustischen Feldgradienten als Funktion der Position, beispielsweise einer 3D-Position, im Halteraum aufweist.

3. Verfahren nach Anspruch 1 oder 2, wobei das Bestimmen der Dichten der Zellkörper umfasst:

   Bestimmen der Sedimentationsgeschwindigkeiten der Zellkörper basierend auf den einen oder mehreren zweiten Trajektorien und dem Sedimentationsmodell, das eine nicht-konstante Viskosität als Funktion der Entfernung zur Wandoberfläche berücksichtigt, vorzugsweise die nicht-konstante Viskosität gemäß Brenners Gesetz; und
   Bestimmen der Dichten der Zellkörper basierend auf den Sedimentationsgeschwindigkeiten und einer mathematischen Beziehung zwischen der Dichte eines Zellkörpers und der Sedimentationsgeschwindigkeit des Zellkörpers.

4. Verfahren nach Anspruch 3, wobei das Bestimmen der Sedimentationsgeschwindigkeiten das Anpassen der einen oder mehreren zweiten Trajektorien an das Sedimentationsmodell umfasst.

5. Verfahren nach einem der Ansprüche 1 bis 4, wobei das Bestimmen der Zellkörpergeschwindigkeiten umfasst: Anpassen der einen oder mehreren ersten Trajektorien an das Geschwindigkeitsmodell, wobei das Geschwindigkeitsmodell eine mathematische Beziehung zwischen der Geschwindigkeit eines Zellkörpers in einer Flüssigkeit, während eine Kraft auf den Zellkörper unter Verwendung eines akustischen Feldgradienten ausgeübt wird, umfasst, vorzugsweise wobei die mathematische Beziehung den Einfluss der Schwerkraft und/oder des Auftriebs und/oder den Einfluss einer Viskositätsänderung der Flüssigkeit gemäß Brenners Gesetz umfasst.

6. Verfahren nach einem der Ansprüche 1 bis 5, wobei das Ausüben eines oder mehrerer Kraftimpulse auf die Zellkörper das Erzeugen der einen oder mehreren akustischen Feldgradienten im Halteraum durch einen akustischen Wellengenerator umfasst.

7. Verfahren nach einem der Ansprüche 1 bis 6, wobei das Verfahren weiter die Klassifizierung der Zellkörper basierend auf den bestimmten Größen, Dichten und/oder Kompressibilitäten umfasst.

8. Verfahren zum Sortieren von Zellkörpern durch Durchführung des Verfahrens nach Anspruch 1, wobei der Halteraum ein Halteraum einer Durchflusszelle ist und die Durchflusszelle ein Sortiergerät aufweist oder mit einem Sortiergerät verbunden ist, wobei die Manipulation weiter den Transport der Zellkörper zu dem Sortiergerät aufweist, und wobei das Verfahren weiter aufweist:

- Verfolgen der Position der Zellkörper während des Transports der Zellkörper zu dem Sortiergerät; und Sortieren der verfolgten Zellkörper durch Steuern des Sortiergeräts basierend auf der Größe, Dichte, dem Kontrastfaktor und/oder der Kompressibilität.

9. Modul zur Bestimmung von Zelleneigenschaften basierend auf einer Bildanalyse, wobei das Modul ein computerlesbares Speichermedium mit darauf verkörpertem computerlesbarem Programmcode und einen Prozessor, vorzugsweise einen Mikroprozessor, der mit dem computerlesbaren Speichermedium gekoppelt ist, umfasst, wobei der Prozessor, wenn der computerlesbare Programmcode ausgeführt wird, konfiguriert ist, um ausführbare Operationen durchzuführen, umfassend:

Empfangen von Bildern, die die Manipulation von Zellkörpern in einem Halteraum darstellen, wobei der Halteraum eine Wandoberfläche aufweist, und die Manipulation einen oder mehrere akustische Kraftimpulse auf die an der Wandoberfläche bereitgestellten Zellkörper umfasst, basierend auf der Erzeugung eines oder mehrerer akustischer Feldgradienten im Halteraum, wobei die Kraftimpulse eine Richtung weg von der Wandoberfläche haben;
Analysieren der Bilder, wobei die Analyse die Bestimmung der Größe der Zellkörper und das Verfolgen der Positionen der Zellkörper während jedes der ein oder mehreren akustischen Kraftimpulse und nach jedem der ein oder mehreren akustischen Kraftimpulse umfasst, wobei die Verfolgung der Positionen eine oder mehrere erste Trajektorien der sich von der Wandoberfläche wegbewegenden Zellkörper und eine oder mehrere zweite Trajektorien der sich zur Wandoberfläche hin bewegenden Zellkörper definiert;
Bestimmen der Dichten der Zellkörper basierend auf dem einen oder mehreren zweiten Trajektorien und einem Sedimentationsmodell der sich zur Wandoberfläche hin bewegenden Zellkörper, und
Bestimmen der Zellkörpergeschwindigkeiten basierend auf dem einen oder mehreren ersten Trajektorien und einem Geschwindigkeitsmodell der sich von der Wandoberfläche wegbewegenden Zellkörper; und
Bestimmen eines Kontrastfaktors für jeden der Zellkörper basierend auf den Grö-ßen und den Dichten der Zellkörper, den einen oder mehreren akustischen Feldgradienten und den Zellkörpergeschwindigkeiten, und
Bestimmen einer Kompressibilität für jeden der Zellkörper basierend auf den bestimmten Kontrastfaktoren.

10. System zur Bestimmung von Zelleneigenschaften, das Folgendes aufweist:

eine Durchflusszelle, die einen Halteraum (104) für Zellkörper (106) aufweist;
einen Kraftgenerator (222) zum Anwenden von akustischen Kraftimpulsen auf die Zellkörper;
ein Bildgebungssystem (116) zur Aufnahme von Bildern der Zellkörper in der Durchflusszelle;
ein Bildverarbeitungssystem (128) zur Verarbeitung der aufgenommenen Bilder;
einen Controller zur Steuerung der Durchflusszelle und des Sortiergeräts; und
ein Modul gemäß Anspruch 9.

11. System zum Sortieren von Zellen basierend auf Zelleneigenschaften, das Folgendes aufweist:

eine Durchflusszelle, die einen Halteraum (104) für Zellkörper (106) aufweist;
ein mit der Durchflusszelle verbundenes Sortiergerät (1020);
einen Kraftgenerator (222) zum Anwenden einer Kraft auf die Zellkörper;
ein Bildgebungssystem (116) zur Aufnahme von Bildern der Zellkörper in der Durchflusszelle;
ein Bildverarbeitungssystem (128) zur Verarbeitung der aufgenommenen Bilder;
einen Controller zur Steuerung der Durchflusszelle und des Sortiergeräts;
ein Modul gemäß Anspruch 9,
wobei die Manipulation weiter den Transport der Zellkörper zu dem Sortiergerät umfasst, und wobei die ausführbaren Operationen weiter umfassen:

- Verfolgen der Position der Zellkörper während des Transports der gelösten Zellkörper zu dem Sortiergerät; und Sortieren der verfolgten Zellkörper durch Steuern des Sortiergeräts basierend auf der Größe, Dichte, dem Kontrastfaktor und/oder der Kompressibilität.

12. Computerprogramm oder eine Suite von Computerprogrammen, die mindestens einen Softwarecodeabschnitt oder ein Computerprogrammprodukt aufweisen, das mindestens einen Softwarecodeabschnitt speichert, wobei der Softwarecodeabschnitt, wenn er auf einem Computersystem ausgeführt wird, zur Durchführung der Verfahrensschritte nach einem der Ansprüche 1 bis 8 konfiguriert ist.

**Revendications**

1. Procédé de détermination de propriétés cellulaires, comprenant :

la réception, par un processeur (118), d'images représentant la manipulation de corps cellulaires (106) dans un espace de rétention (104), l'espace de rétention comprenant une surface de paroi, la manipulation comprenant le fait d'exercer une ou plusieurs impulsions de force acoustique sur les corps cellulaires fournis sur la surface de paroi sur la base de la génération d'un ou de plusieurs gradients de champ acoustique dans l'espace de rétention, les impulsions de force présentant une direction s'éloignant de la surface de paroi ;
l'analyse, par le processeur (118), des images, l'analyse comprenant la détermination de la taille des corps cellulaires et d'emplacements de suivi des corps cellulaires pendant chacune des une ou plusieurs impulsions de force acoustique et après chacune des une ou plusieurs impulsions de force acoustique, les emplacements de suivi définissant une ou plusieurs premières trajectoires des corps cellulaires s'éloignant de la surface de paroi et une ou plusieurs secondes trajectoires des corps cellulaires se déplaçant vers la surface de paroi ;
la détermination, par le processeur (118), des densités des corps cellulaires sur la base des une ou plusieurs secondes trajectoires et d'un modèle de sédimentation des corps cellulaires se déplaçant vers la surface de paroi et la détermination des vitesses des corps cellulaire sur la base des une ou plusieurs premières trajectoires et d'un modèle de vitesse des corps cellulaires s'éloignant de la surface de paroi ; et
la détermination, par le processeur (118), d'un facteur de contraste pour chacun des corps cellulaires sur la base des tailles et des densités des corps cellulaires, des un ou plusieurs gradients de force acoustique et des vitesses des corps cellulaires et la détermination d'une compressibilité pour chacun des corps cellulaires sur la base des facteurs de contraste déterminés.

2. Procédé selon la revendication 1, dans lequel l'analyse des images comprend en outre la détermination des positions des corps cellulaires et l'utilisation d'une carte d'un gradient de champ acoustique non homogène dans l'espace de rétention pour déterminer les gradients de champ acoustique aux positions des corps cellulaires, de préférence la carte comprend des informations associées à un gradient de champ acoustique en fonction de la position, par exemple une position 3D, dans l'espace de rétention.

3. Procédé selon la revendication 1 ou 2, dans lequel la détermination des densités des corps cellulaires comprend :

la détermination des vitesses de sédimentation des corps cellulaires sur la base des une ou plusieurs secondes trajectoires et du modèle de sédimentation qui prend en compte une viscosité non constante en fonction d'une distance jusqu'à la surface de paroi, de préférence la viscosité non constante selon la loi de Brenner ; et
la détermination des densités des corps cellulaires sur la base des vitesses de sédimentation et d'une relation mathématique entre une densité d'un corps cellulaire et une vitesse de sédimentation du corps cellulaire.

4. Procédé selon la revendication 3, dans lequel la détermination des vitesses de sédimentation comprend l'ajustement des une ou plusieurs secondes trajectoires avec le modèle de sédimentation.

5. Procédé selon l'une quelconque des revendications 1 à 4, dans lequel la détermination des vitesses de corps cellulaire comprend :

l'ajustement des une ou plusieurs premières trajectoires avec le modèle de vitesse, le modèle de vitesse comprenant une relation mathématique entre une vitesse d'un corps cellulaire dans un fluide tandis qu'une force est exercée sur le corps cellulaire en utilisant un gradient de champ acoustique,
de préférence la relation mathématique comprend l'effet de la pesanteur et/ou de la flottabilité et/ou l'effet d'un risque de viscosité du fluide selon la loi de Brenner.

6. Procédé selon l'une quelconque des revendications 1 à 5, dans lequel le fait d'exercer une ou plusieurs impulsions de force sur les corps cellulaires comprend la génération, par un générateur d'ondes acoustiques, des un ou plusieurs gradients de champ acoustique dans l'espace de rétention.

7. Procédé selon l'une quelconque des revendications 1 à 6, dans lequel le procédé comprend en outre la classification des corps cellulaires sur la base des tailles, densités et/ou compressibilités déterminées.

8. Procédé de tri de corps cellulaires comprenant la mise en oeuvre du procédé selon la revendication 1, dans lequel l'espace de rétention est un espace de rétention d'une cellule d'écoulement et la cellule d'écoulement comprend ou est raccordée à un dispositif de tri, dans lequel la manipulation comprend en outre le transport des corps cellulaires vers le dispositif de tri, et
dans lequel le procédé comprend en outre :

- le suivi de l'emplacement des corps cellulaires pendant le transport des corps cellulaires vers le dispositif de tri ; et le tri des corps cellulaires suivis en commandant le dispositif de tri sur la base de la taille, de la densité, du facteur de contraste et/ou de la compressibilité.

9. Module de détermination de propriétés cellulaires sur la base d'une analyse d'image, le module comprenant un support de stockage lisible par ordinateur incorporant un code de programme lisible par ordinateur, et un processeur, de préférence un microprocesseur, couplé au support de stockage lisible par ordinateur, dans lequel en réponse à l'exécution du code de programme lisible par ordinateur, le processeur est configuré pour effectuer des opérations exécutables comprenant :

la réception d'images représentant la manipulation de corps cellulaires dans un espace de rétention, l'espace de rétention comprenant une surface de paroi, la manipulation comprenant le fait d'exercer une ou plusieurs impulsions de force acoustique sur les corps cellulaires fournis sur la surface de paroi sur la base de la génération d'un ou de plusieurs gradients de champ acoustique dans l'espace de rétention, les impulsions de force présentant une direction s'éloignant de la surface de paroi ;
l'analyse des images, l'analyse comprenant la détermination de la taille des corps cellulaires et d'emplacements de suivi des corps cellulaires pendant chacune des une ou plusieurs impulsions de force acoustique et après chacune des une ou plusieurs impulsions de force acoustique, les emplacements de suivi définissant une ou plusieurs premières trajectoires des corps cellulaires s'éloignant de la surface de paroi et une ou plusieurs secondes trajectoires des corps cellulaires se déplaçant vers la surface de paroi ;
la détermination des densités des corps cellulaires sur la base des une ou plusieurs secondes trajectoires et d'un modèle de sédimentation des corps cellulaires se déplaçant vers la surface de paroi et la détermination des vitesses des corps cellulaire sur la base des une ou plusieurs premières trajectoires et d'un modèle de vitesse des corps cellulaires s'éloignant de la surface de paroi ; et
la détermination d'un facteur de contraste pour chacun des corps cellulaires sur la base des tailles et des densités des corps cellulaires, des un ou plusieurs gradients de force acoustique et des vitesses des corps cellulaires et la détermination d'une compressibilité pour chacun des corps cellulaires sur la base des facteurs de contraste déterminés.

10. Système de détermination de propriétés cellulaires comprenant :

une cellule d'écoulement comprenant un espace de rétention (104) pour des corps cellulaires (106) ;
un générateur de force (222) pour appliquer des impulsions de force acoustique aux corps cellulaires ;
un système d'imagerie (116) pour capturer des images des corps cellulaires dans la cellule d'écoulement ;
un système de traitement d'image (128) pour traiter les images capturées ;
un dispositif de commande pour commander la cellule d'écoulement et le dispositif de tri ; et
un module selon la revendication 9.

11. Système de tri de cellules sur la base de propriétés cellulaires comprenant :

une cellule d'écoulement comprenant un espace de rétention (104) pour des corps cellulaires (106) ;
un dispositif de tri (1020) raccordé à la cellule d'écoulement ;
un générateur de force (222) pour appliquer une force aux corps cellulaires ;
un système d'imagerie (116) pour capturer des images des corps cellulaires dans la cellule d'écoulement ;
un système de traitement d'image (128) pour traiter les images capturées ;
un dispositif de commande pour commander la cellule d'écoulement et le dispositif de tri ;

un module selon la revendication 9,
dans lequel la manipulation comprend en outre le transport des corps cellulaires vers le dispositif de tri, et
dans lequel les opérations exécutables comprennent en outre :

- le suivi de l'emplacement des corps cellulaires pendant le transport des corps cellulaires détachés vers le dispositif de tri ; et le tri des corps cellulaires suivis en commandant le dispositif de tri sur la base de la taille, de la densité, du facteur de contraste et/ou de la compressibilité.

12. Programme informatique ou suite de programmes informatiques comprenant au moins une partie de code logiciel ou un produit-programme informatique stockant au moins une partie de code logiciel, la partie de code logiciel, lorsqu'elle est exécutée sur un système informatique, étant configurée pour exécuter les étapes de procédé selon l'une quelconque des revendications 1 à 8.

**Fig. 1**

**Fig. 2A**

**Fig. 2B**

EP 4 226 141 B1

Fig. 3

```
┌──────────────────────────────────────────────────────────────────────────────────┐
│          flush cellular bodies into holding space of a flow cell and let the       │
│                    cellular bodies settle onto a                                   │
│                    wall surface of the holding space                               │
│  402                                                                               │
└──────────────────────────────────────────────────────────────────────────────────┘
```

```
┌──────────────────────────────────────────────────────────────────────────────────┐
│   apply an acoustic force pulse to the cellular bodies by generating an acoustic   │
│   field gradient in the holding space, the acoustic force pulse having a direction │
│   away from the wall surface and capture images of the cellular bodies moving in   │
│  404                              the holding space                                │
└──────────────────────────────────────────────────────────────────────────────────┘
```

```
┌──────────────────────────────────────────────────────────────────────────────────┐
│  406                      analyze the captured images                              │
│  ┌──────────────────┐  ┌────────────────────────┐  ┌────────────────────────────┐ │
│  │                  │  │ determine shooting up   │  │ determine sedimentation    │ │
│  │ determine a size │  │ trajectories of cellular│  │ trajectories of cellular   │ │
│  │ of the cellular  │  │ bodies moving away from │  │ bodies moving towards the  │ │
│  │ bodies           │  │ the bottom of the       │  │ bottom of the holding      │ │
│  │                  │  │ holding space during    │  │ space after the acoustic   │ │
│  │                  │  │ the acoustic force pulse│  │               force pulse  │ │
│  │ 408              │  │ 410                     │  │ 412                        │ │
│  └──────────────────┘  └────────────────────────┘  └────────────────────────────┘ │
└──────────────────────────────────────────────────────────────────────────────────┘
```

```
┌──────────────────────────────────────────────────────────────────────────────────┐
│  determine densities of the cellular bodies based on the one or more second        │
│  trajectories and a sedimentation model of the cellular bodies moving towards the  │
│  wall surface and determine cellular body velocities based the one or more first   │
│     trajectories and a velocity model of the cellular bodies moving away from the  │
│  414                               wall surface                                    │
└──────────────────────────────────────────────────────────────────────────────────┘
```

```
┌──────────────────────────────────────────────────────────────────────────────────┐
│  determine a contrast factor for each of the cellular bodies based on the sizes    │
│  and the densities of the cellular bodies, the acoustic field gradient and the     │
│  cellular body velocities and determine a compressibility for each of the cellular │
│  416                  bodies based on the determined contrast factors.             │
└──────────────────────────────────────────────────────────────────────────────────┘
```

**Fig. 4**

flush calibration beads of a known size, density and compressibility into holding space of a flow cell and let the calibration beads settle at different positions onto a wall surface of the holding space

502

↓

apply an acoustic force pulse to the settled calibration beads, the force pulse having a direction away from the wall surface and capturing images of the calibration beads settled on the wall surface and moving in the holding space

504

↓

analyze the captured images, the analyzing including determine positions of the settled calibration beads and shooting up trajectories of the calibration beads moving away from the wall surface during the force pulse

506

↓

determine calibration bead velocities $v_B$ of the calibration beads based on fitting the shooting up trajectories to a velocity model

508

↓

determine acoustic field intensities and/or applied acoustic forces at the different positions in the holding space based on the calibration bead velocities

510

**Fig. 5**

**Fig. 6A**

**Fig. 6B**

Fig. 7

Fig. 6C

Fig. 8B

Fig. 8A

A

Compressibility ($10^{-10}$ Pa$^{-1}$)

B

Density (g/ml)

**Fig. 9**

**Fig. 10**

**Fig. 11**

**Fig. 12**

**EP 4 226 141 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9453787 B
- WO 2014200341 A
- NL 2024155

### Non-patent literature cited in the description

- **NGUYEN.** *icrochip based microrheology via Acoustic Force Spectroscopy shows that endothelial cell mechanics follows a fractional viscoelastic model*
- **WANG et al.** Single-cell compressibility quantification for assessing metastatic potential of cancer cells through multi-frequency acoustophoresis. *Microfluids and Nanofluidics,* 2018, vol. 22, 26
- **CHOI et al.** Microfluidic deformability-activated sorting of single particles. *Microsystems & Nanoengineering,* 2020, vol. 6 (11
- **VAN LOENHOUT et al.** Non-bias-limited tracking of spherical particles, enabling nanometer resolution at low magnification. *Biophys. J.,* 2012, vol. 102, 2362-2371
- **GOSSE et al.** Magnetic tweezers: micromanipulation and force measurement at the molecular level. *Biophys. J.,* 2002, vol. 82, 3314-3329
- **JAQUAMAN et al.** Robust single-particle tracking in live-cell time-lapse sequences. *Nature Methods,* August 2008, vol. 8 (8), 295-702
- **CHEEZUM et al.** Quantitative comparison of algorithms for tracking single fluorescent particles. *Biophysical journal,* 2008, vol. 81.4, 2378-2388
- **ZHANG ; LIU.** Optical tweezers for single cells Hu, Interface. *J. R. Soc. Interface,* 2008, vol. 5, 671-690